Europäisches Patentamt

European Patent Office

Office européen des brevets

(11) Veröffentlichungsnummer: **0 057 961**
A2

## (12) EUROPÄISCHE PATENTANMELDUNG

(21) Anmeldenummer: 82200139.2

(22) Anmeldetag: 05.02.82

(51) Int. Cl.³: **C 08 F 232/08**
C 08 F 222/06, C 08 F 222/04
C 08 F 6/12

(30) Priorität: 10.02.81 DE 3104621

(43) Veröffentlichungstag der Anmeldung:
18.08.82 Patentblatt 82/33

(84) Benannte Vertragsstaaten:
BE CH DE FR GB IT LI LU NL SE

(71) Anmelder: CHEMISCHE WERKE HÜLS AG
Postfach 1320
D-4370 Marl 1(DE)

(72) Erfinder: Gude, Fritz, Dr.
Wilhelmstrasse 4
D-4690 Herne 2(DE)

(72) Erfinder: Haferkorn, Herbert
Horster Strasse 528
D-4250 Bottrop(DE)

(74) Vertreter: Steil, Hanna, Dipl.-Chem.
RSP PATENTE - PB 40 Herzogstrasse 28 Postfach 2840
D-4690 Herne 2(DE)

(54) Verfahren zur Herstellung von wässrigen Salzlösungen aus Maleinsäureanhydrid-Dicyclopentadien-Copolymerisat.

(57) Verfahren zur Herstellung von wässrigen Salzlösungen aus Maleinsäureanhydrid-Dicyclopentadien-Copolymerisat, wobei man die radikalische Copolymerisation in mit Wasser nicht mischbaren aliphatischen Methyl- und/oder Ethyl ketonen mit 5 bis 8 C-Atomen durchführt, anschließend die gebildete Copolymerisatlösung mit wässrigen Alkalien extrahiert und die wässrig-alkalische Phase von dem Lösungsmittel trennt.

Die ketonische Lösung des Polymeren kann vor der Behandlung mit den wässrigen Alkalien mit Wasser gewaschen werden.

EP 0 057 961 A2

## Verfahren zur Herstellung von wässrigen Salzlösungen aus Maleinsäureanhydrid-Dicyclopentadien-Copolymerisat.

Führt man die radikalisch initiierte Copolymerisation von Maleinsäureanhydrid mit Dicyclopentadien in aromatischen Lösungsmitteln durch, fallen die Polymerisate schwerlöslich aus. Über diese Arbeitsweise finden sich in der Literatur viele Publikationen. So wird in der US-PS 3 188 303 beschrieben, Maleinsäureanhydrid mit Dicyclopentadien in Benzol zu polymerisieren. Weiter geht aus der DE-OS 2 727 510 hervor, daß man Copolymerisate aus Maleinsäureanhydrid und Dicyclopentadien in Toluol herstellen kann. In der DE-OS 2 943 980 wird bei der Copolymerisation von Maleinsäureanhydrid, Dicyclopentadien und Cyclooctadien und in der DE-OS 2 939 293 bei der Copolymerisation von Maleinsäureanhydrid, Dicyclopentadien und Vinylcyclohexen Cumol als Lösungsmittel verwendet.

Aus allen diesen aromatischen Lösungsmitteln fallen die Copolymerisate aus Maleinsäureanhydrid mit Dicyclopentadien, gegebenenfalls unter Zusatz von Olefinen, zwar fest, jedoch stark gequollen aus, und es ist schwierig, das Lösungsmittel daraus weitgehend zu entfernen. Versucht man, das gequollene Polymerisat in wässrigen Alkalien zu lösen, erhält man untrennbare Emulsionen, in denen noch beträchtliche Mengen halbfester Substanz enthalten sind.

Voraussetzung zur Herstellung von wässrigen alkalischen Lösungen aus Copolymerisaten nach diesen Verfahren war bis jetzt eine weitgehende Entfernung der Aromaten, z.B. durch 35- bis 45-stündiges Trocknen bei etwa 140°C und 40 mbar, gegebenenfalls unter Durchleiten von Wasserdampf bzw. indifferenten Gasen. Selbst danach kann man noch 1-2 % Aromaten, wie z.B. Cumol, im Copolymerisat aus Maleinsäureanhydrid mit Dicyclopentadien als Restfeuchte nachweisen. Da eine Schädigung des Polymerisates bei der hohen Temperaturbelastung auftritt, mußte die Trockentemperatur auf max. 120°C zurückgenommen werden. Dadurch erhöht sich jedoch die notwendige Trocknungszeit erheblich.

Als Alternative zur Trocknung bietet sich die Wasserdampfdestillation des filterfeuchten Maleinsäureanhydrid-Dicyclopentadien-Copolymerisates an. Um Substanzschädigungen zu vermeiden, kann man zweckmäßig unter Normalbedingungen arbeiten. Dabei ist für 10 g filterfeuchtes Copolymerisat nötig, 3,5 - 4 l Wasser überzudestillieren, um den Aromatengehalt im Copolymerisat soweit zu senken, daß sich mit wässrigen Alkalien eine einigermaßen klare Lösung herstellen läßt. - Bei der Polymerisation in Aromaten darf die Konzentration der Einsatzmonomeren ein gewisses Maß nicht überschreiten. Polymerisiert man Maleinsäureanhydrid und Dicyclopentadien im Verhältnis ~1:1, bilden sich beim Einsatz von höheren Gesamtmonomerkonzentrationen als 23 Gew.% bereits erhebliche, in organischen Lösungsmitteln und wässrigen Alkalien nicht mehr lösliche Anteile.

Die Ausbeute bei der Copolymerisation von Maleinsäureanhydrid mit Dicyclopentadien im Molverhältnis ~1:1 und Cumol als Lösungsmittel bewegen sich zwischen 68 und 76 Gew.%.

In aliphatischen und cycloaliphatischen Lösungsmitteln ist eine Copolymerisation zwar möglich, führt aber zu unsauberen, dunklen Materialien (US-PS 3 188 303).

Aus der Literatur ist auch bekannt, daß sich Maleinsäureanhydrid-Dicyclopentadien-Copolymerisate in bestimmten Lösungsmitteln lösen. So findet man Hinweise auf Dioxan, Aceton und Cyclohexanon. In diesen Medien sind auch bereits radikalisch initiierte Copolymerisationen von Maleinsäureanhydrid und Dicyclopentadien ausgeführt worden (US-PS 3 188 303; J.Polym.Sci., A 11, 1795, [1977].

Es stellte sich nun überraschend heraus, daß aliphatische Monoketone im Bereich von 5 bis 8 C-Atomen dann eine vollständige Löslichkeit für das Copolymerisat aus Maleinsäureanhydrid und Dicyclopentadien aufweisen, wenn die Keto-Gruppe in Zwei- oder Dreistellung des Moleküls angeordnet ist. Sie zeigen - im Gegensatz zu den in der Literatur zitierten, oben aufgeführten Lösungsmitteln Dioxan, Aceton und Cyclohexanon - nur eine geringe Löslichkeit in Wasser. Die erfindungsgemäß eingesetzten Methyl- oder Ethylketone besitzen in dem oben angegebenen Molgewichtsbereich das Vermögen, sogar bis zur Konzentration oberhalb 40 Gew.% Copolymerisat zu lösen. In ihnen können über 40%ige Lösungen eines unvernetzten Maleinsäureanhydrid-Dicyclopentadien-Copolymerisates mit radikalischen Katalysatoren direkt hergestellt werden. In Aromaten dagegen treten beim Einsatz von Gesamtmonomeren von mehr als 23 Gew.% bereits vernetzte Anteile auf, die in wässrigen Alkalien unlöslich sind.

Verwendet man andere Olefine als Partner für das Maleinsäureanhydrid, wie z.B. Styrol, Vinylcyclohexen, Cyclooctadien oder Gemische von Dicyclopentadien mit anderen Olefinen, scheidet sich das Polymerisat ganz oder teilweise aus den erfindungsgemäß eingesetzten Methyl- oder Ethylketonen ab.

Als geeignete Ketone kommen z.B. Diethylketon, Methylisopropylketon, Methylbutylketon, Methylisobutylketon, Ethylpropylketon, Methylpentylketon, Ethylbutylketon, Methylhexylketon, Methylisoamylketon, Methylamylketon usw. in Frage. Die Löslichkeit der Ketone mit Wasser sinkt mit steigender Kettenlänge und ist bei den erfindungsgemäß verwendeten Ketonen so gering, daß es möglich ist, daraus überraschenderweise unmittelbar, mit geringem Zeitaufwand, und auf einfache Art lösungsmittelarme, klare, helle, alkalisch-wässrige Lösungen direkt aus der organischen Polymerisatlösung, z.B. durch Ausschütteln, herzustellen. Ist die Keto-Gruppe in einer anderen Stellung angeordnet, oder besitzt das verwendete Monoketon mehr als 8 C-Atome, setzt sich das Copolymerisat aus Maleinsäureanhydrid und Dicyclopentadien ganz oder teilweise, häufig schmierig, aus dem Lösungsmittel schon während der Polymerisation ab. Es ist möglich, den erfindungsgemäß verwendeten Ketonen indifferente Lösungsmittel, wie z.B. Aromaten und/oder Aliphaten bis zu 40 Vol.% zuzumischen, ohne daß eine Ausfällung erfolgt.

Bemerkenswert ist, daß die Ausbeuten an Polymerisat in den erfindungsgemäß verwendeten Ketonen erheblich höher liegen als in den aromatischen Lösungsmitteln nach dem Stand der Technik. Während nach dem bekannten Verfahren, also bei der Copolymerisation von Maleinsäureanhydrid mit Dicyclopentadien im Molverhältnis 1:1 in Aromaten, eine Ausbeute zwischen 68-76 % gefunden wurde, gelang in den erfindungsgemäßen Lösungsmitteln eine Steigerung auf 85 bis $\geq$ 99 Gew.%.

Gegenstand der Erfindung ist daher ein Verfahren zur Herstellung von wässrigen Salzlösungen aus Maleinsäureanhydrid-Dicyclopentadien-Copolymerisat, das dadurch gekennzeichnet ist, daß man die radikalische Copolymerisation in mit Wasser nicht mischbaren aliphatischen Methyl- und/oder Ethylketonen mit 5 bis 8 C-Atomen durchführt, anschließend die gebildete Copolymerisatlösung mit wässrigen Alkalien extrahiert und die wässrig-alkalische Phase von dem Lösungsmittel trennt.

In praxi kann man z.B. so verfahren, daß man die etwa 30-40 Gew.%ige Copolymerisatlösung, hergestellt aus Maleinsäureanhydrid und Dicyclopentadien in z.B. Heptanon-2, bei Temperaturen zwischen etwa 40-95°C mit der zur Salzbildung ausreichenden Menge Alkali in Wasser 1/2 - 2 h rührt. Die beiden Schichten trennen sich anschließend mit geringem Zeitaufwand. Die untere wässrige Schicht besteht aus der unmittelbar verwendungsfähigen polymeren Salzlösung. Die obere organische Schicht ist praktisch frei von Polymerisaten, Säuren und Anhydriden. Sie kann nach geeigneter Trocknung unmittelbar als Lösungsmittel für die nächste Polymerisation eingesetzt werden.

Je nach Art und Molverhältnis der eingesetzten Monomeren kann unter Umständen eine geringe Schaumbildung der wäßrigen alkalischen Lösung der Polymeren auftreten. Man kann sie vermeiden, wenn man die organische Lösung des Copolymerisates zunächst mit Wasser wäscht und anschließend mit den wässrigen Alkalien extrahiert. Dadurch wird u.a. eventuell noch vorhandenes Maleinsäureanhydrid in monomerer oder polymerer Form unter Hydrolyse aus der Reaktionslösung entfernt, während das Copolymerisat in der organischen Schicht verbleibt.

Aus den etwa 40%igen Lösungen in den erfindungsgemäß verwendeten Ketonen fallen nach den Polymerisationen beim Abkühlen auf Zimmertemperatur keine Copolymerisate aus.

Als alkalische Reaktionspartner für die Copolymerisate können wässrige Lösungen von primären, sekundären oder tertiären Aminen, quartemären Ammoniumhydroxiden, Ammoniak sowie die Hydroxide der 1.Hauptgruppe des Periodischen Systems einzeln oder in Gemischen dienen.

Die wässrig-alkalischen Lösungen gemäß dieser Erfindung kann man z.B. als anionische Oberflächenleimungsmittel für Papier, Verdickungsmittel, Emulgatoren usw. einsetzen.

Beispiele

1) Methylpentylketon (Heptanon-2) als Polymerisatlösungsmittel

Eine Lösung von 161 g Maleinsäureanhydrid und 289 g Dicyclopentadien in 680 ml Methylpentylketon heizt man auf etwa 93°C auf, deckt das Reaktionsgut mit Stickstoff ab und tropft eine Lösung von 30,3 g Benzoylperoxid in 320 ml Methylpentylketon so ein, daß die Temperatur von 95°C nicht überschritten wird.

- 6 -

Dazu benötigt man etwa 3 Stunden. Anschließend erfolgt eine Nachreaktion von etwa 2 Stunden bei gleicher Temperatur, wonach kein Peroxid mehr nachweisbar ist. Anschließend läßt man auf etwa 80°C abkühlen. Eine Abscheidung von Festprodukt erfolgt dabei nicht. Zur Entfernung von nicht umgesetztem Maleinsäureanhydrid aus der organischen Lösung wird nun mit 600 ml Wasser gewaschen. Anschließend emulgiert man die organische Phase in 993 ml einer 5,6%igen wässrigen $NH_3$-Lösung und versetzt anschließend mit 929 ml Wasser. Die Höhe der Emulsion beträgt etwa 13 cm. Nach etwa 15 Minuten hat sich bei einer Temperatur von etwa 80°C die Trennung vollzogen. In der klaren, wässrigen, schwach-gelben Phase befindet sich das gesamte Copolymerisat als Ammoniumsalz gelöst.

Die Ausbeute an Copolymerisat ist 98,7 % der Theorie, bezogen auf eingesetztes Maleinsäureanhydrid.

Zur Entfernung eines geringen Ketongeruchs kann man die wässrige Lösung mit Wasserdampf bei 100°C behandeln. Dabei sinkt der $p_H$ der Lösung von 8 auf etwa 5 ab. Nach Abkühlung entsteht dann ein geringer Niederschlag, der durch Zugabe von Ammoniak-Lösung wieder verschwindet.

Die Ketonphase enthält nach der Ammoniakbehandlung das überschüssige Dicyclopentadien, Wasser und Ammoniak. Um das Lösungsmittelgemisch wieder in den Kreis zurückfahren zu können, ist es notwendig, das gelöste Wasser und das Ammoniak in bekannter Art zu entfernen.

Unter sinngemäß gleichen Bedingungen kann die Heptanon-Lösung mit wässrigen Lösungen von 4,5%igem Lithiumhydroxid, 9,5%igem Kaliumhydroxid, 6,7%igem Natriumhydroxid, 11%igem Aminoethanol oder 14%igem Morpholin geschüttelt werden, wobei das Copolymerisat quantitativ in die wässrige Phase geht. Die Schichtentrennung ist in allen Fällen, spätestens nach 40 Minuten (80°C), vollzogen.

2) Methylisobutylketon als Copolymerisatlösungsmittel

680 ml Methylisobutylketon legt man mit 169 g Maleinsäureanhydrid und 273 g Dicyclopentadien vor und heizt auf etwa 93°C auf, wobei vollständige Lösung eintritt. Nun wird mit Stickstoff abgedeckt und eine Lösung von 25,5 g Benzoylperoxid in 320 ml Methylisobutylketon so zugetropft, daß 95°C nicht überschritten wird. Danach wird die Temperatur noch solange gehalten, bis kein Peroxid mehr nachweisbar ist. Anschließend läßt man auf 80°C abkühlen, schüttelt die klare Lösung mit 1047 ml 5,6%iger wässriger Ammoniaklösung kräftig durch, versetzt mit 975 ml Wasser und schüttelt nochmal (Höhe der Emulsion: 13cm). Anschließend erfolgt rasch - innerhalb von 20 Minuten - die Trennung. Bei allen diesen Schritten wird eine Temperatur von etwa 80°C gehalten.

In der wässrigen Phase findet sich nun das Ammoniumsalz des Copolymeren. Ausbeute 99,7 % der Theorie, bezogen auf Maleinsäureanhydrid.

3) Methylisoamylketon (5-Methyl-hexan-2-on) als Copolymerisationslösungsmittel

Bei einem analog 2) gefahrenen Ansatz mit Methylisoamylketon als Lösungsmittel erhält man das Ammoniumsalz des Copolymeren mit einer Ausbeute von 97,5 % der Theorie, bezogen auf eingesetztes Maleinsäureanhydrid. Die Phasentrennung nach der Extraktion mit 5,6%igem wässrigem Ammoniak ist nach 2 Stunden erreicht (Höhe der emulgierten Phasen: 14 cm).

4) Ethylbutylketon (Heptanon-3) als Polymerisatlösungsmittel

Unter sonst gleichen Bedingungen wie beim Beispiel 2)
beschrieben, wird die Copolymerisation in Ethylbutylketon durchgeführt und anschließend durch Reaktion
mit der wässrigen Ammoniaklösung die Salzlösung bereitet. Die Trennung vollzieht sich bei einer Höhe
der Emulsion von 14 cm in 45 Minuten bei 80°C. Die
Ausbeute an Copolymerem beträgt 90,1 %, bezogen auf
eingesetztes Maleinsäureanhydrid.

5) Diethylketon (Pentanon-3) als Polymerisatlösungsmittel

Unter sonst gleichen Bedingungen wie unter 2) beschrieben, wird Maleinsäureanhydrid mit Dicyclopentadien in
Diethylketon als Lösungsmittel polymerisiert und anschließend durch Schütteln mit der wässrigen Ammoniaklösung bei 80°C umgesetzt. Innerhalb 15 Minuten tritt
bei einer Höhe der Emulsion von 14 cm klare Phasentrennung ein. Die Ausbeute an Ammoniumsalz des Copolymerisates ist 84,3 % der Theorie, bezogen auf eingesetztes
Maleinsäureanhydrid.

6) Methylhexylketon (Octanon-2) als Polymerisatlösungsmittel

In Methylhexylketon als Lösungsmittel wird ein Mol
Maleinsäureanhydrid mit einem Mol Dicyclopentadien als
30%ige Lösung bei 93°C copolymerisiert und anschließend
durch Extraktion mit wässrigem Ammoniak die wässrige
Ammoniumsalzlösung hergestellt, wie es unter 2) beschrieben ist. Die Höhe der Emulsion beträgt 14 cm.

Die Trennung tritt bei 80°C innerhalb von 15 Minuten
ein. Die Ausbeute an Copolymerisat beträgt 98,8 % der
Theorie, bezogen auf Maleinsäureanhydrid.

7) Vergleichsversuch in Cumol

Eine nach DE-OS 2 727 510 in Cumol aus einem Mol Maleinsäureanhydrid und einem Mol Dicyclopentadien hergestelltes Copolymerisat besitzt nach Abtrennen des Lösungsmittels noch eine Restfeuchte von 32 % Cumol. 30 g dieses filterfeuchten Copolymerisates kann durch Rühren mit 125 m$^3$ 6%igem Ammoniakwasser bei 80°C in eine Suspension übergeführt werden, aus der sich nach tagelangem Stehen bei Zimmertemperatur nur ganz geringe Mengen Cumol abscheiden. Eine Lösung der festen, gequollenen Substanz ist nicht festzustellen.

0057961

- 1 -    O.Z. 3705

1. Patentansprüche:

Verfahren zur Herstellung von wässrigen Salzlösungen
aus Maleinsäureanhydrid-Dicyclopentadien-Copolymerisat,
dadurch gekennzeichnet,
daß man die radikalische Copolymerisation in mit Wasser
nicht mischbaren aliphatischen Methyl- und/oder Ethylketonen mit 5 bis 8 C-Atomen durchführt, anschließend
die gebildete Copolymerisatlösung mit wässrigen Alkalien extrahiert und die wässrig-alkalische Phase
von dem Lösungsmittel trennt.

2. Verfahren nach Anspruch 1,
dadurch gekennzeichnet,
daß die ketonische Lösung des Polymeren vor der Behandlung mit den wässrigen Alkalien mit Wasser gewaschen wird.